# EUROPÄISCHE PATENTSCHRIFT

(11) **EP 1 689 688 B1**
(45) Veröffentlichungstag und Bekanntmachung des Hinweises auf die Patenterteilung: **04.06.2008**
(21) Anmeldenummer: 04714688.1
(22) Anmeldetag: 26.02.2004
(51) Int. Cl.: C03B 33/07, C03B 33/03, B24B 9/10

(54) **VORRICHTUNG ZUM SCHNEIDEN UND ENTSCHICHTEN VON GLAS**
DEVICE FOR CUTTING GLASS AND REMOVING COATINGS THEREFROM
DISPOSITIF DE DECOUPE ET D'ENLEVEMENT DE COUCHE DE VERRE

(30) Priorität: 06.11.2003 WO PCT/AT03/00332
(43) Veröffentlichungstag der Anmeldung: 16.08.2006
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred
(86) Internationale Anmeldenummer: PCT/AT2004/000059
(87) Internationale Veröffentlichungsnummer: WO 2005/044746

(56) Entgegenhaltungen:
- EP-A- 0 517 176
- US-A- 5 449 312

## Beschreibung

Die Erfindung betrifft eine Vorrichtung mit den Merkmalen des einleitenden Teils von Anspruch 1.

Vorrichtungen, mit denen Glastafeln, die mit einer Beschichtung (beispielsweise einer Metallbeschichtung) versehen sind, geteilt und im Randbereich der erhaltenen Zuschnitte im Sinne eines Abtragens der Beschichtung bearbeitet werden, sind bekannt. Beispielhaft wird auf die EP 0 517 176 A und die US-A-5 449 312 A (= EP 0 603 152 A) verwiesen. Mit diesen Vorrichtungen können Glastafeln entlang der Aufteilungskontur beidseitig der zu erzeugenden Schnittlinien durch Bearbeiten mit einem Entschichtungswerkzeug, z.B. Schleifscheibe (mit gummiartiger Konsistenz), abtragend so bearbeitet werden, dass (nur) die Beschichtung entfernt wird. Nach dem Entfernen der Beschichtung beidseitig der Aufteilungskontur wird die Glastafel mit Hilfe eines Schneidrädchens geritzt ("geschnitten"), worauf dann in üblicher Weise das Aufteilen der Glasscheibe entlang der erzeugten Ritzlinien, durch Brechen, insbesondere auf Brechtischen, erfolgt.

Das Entfernen einer Beschichtung von Glastafeln ist insbesondere von Bedeutung, wenn die Glastafeln oder aus diesen erzeugte Zuschnitte für das Herstellen von Isolierglas verwendet werden sollen, da die Kleber (meist Butylkautschuk), welche bei Isolierglas die Abstandhalterrahmen mit den Glastafeln verbinden und den Innenraum gegenüber der Umgebung abdichten, mit Metallbeschichtungen schlecht verträglich sind.

Problematisch bei der bekannten Vorrichtung ist es, dass sogenannte Formenscheiben, also Glaszuschnitte mit anderen als nur geraden Umrissformen, nicht oder nur umständlich im Sinne eines Entschichtens und Schneidens (Ritzen) bearbeitet werden können.

Der Erfindung liegt die Aufgabe zugrunde, eine einfach aufgebaute Vorrichtung vorzusehen, mit welcher Glastafeln mit beliebiger Umrissform, also auch sogenannten Formenscheiben, entschichtet und geschnitten werden können.

Gelöst wird diese Aufgabe mit einer Vorrichtung, welche die Merkmale von Anspruch 1 aufweist.

Bevorzugte und vorteilhafte Ausgestaltungen der erfindungsgemäßen Vorrichtung sind Gegenstand der abhängigen Unteransprüche.

Da bei der erfindungsgemäßen Vorrichtung an dem am Balken einer Schneidanlage (Glasschneidetisch) verfahrbaren Schlitten zusätzlich zu dem Schneidwerkzeug (Schneidrädchen) auch ein Entschichtungswerkzeug montiert ist, ergibt sich insgesamt eine leichte Konstruktion und es ist beispielsweise der aus der US-A-5 449 312 bekannte Doppelbalken für die Schneidbrücke nicht mehr erforderlich.

Von Vorteil ist weiters, dass der Schwenkantrieb für das Entschichtungswerkzeug, um dessen Entschichtungsscheibe beim Entschichten beidseitig von noch zu erzeugenden Ritzlinien durch Schwenken jeweils richtig - also mit zur Ritzlinie normal ausgerichteten Achse - auszurichten, mit dem Schwenkantrieb für das Schneidwerkzeug gekuppelt werden kann, wenn entschichtet werden soll. Auf diese Weise ist bei der Erfindung ein gesonderter Schwenkantrieb für das Entschichtungswerkzeug entbehrlich, und es ergibt sich überdies der Vorteil, dass ein- und derselbe Antrieb wahlweise für das Schneidwerkzeug (beim Ritzen) und für das Entschichtungswerkzeug (beim Entschichten) eingesetzt werden kann. Auch ist es nicht mehr erforderlich, für das Entschichtungswerkzeug (Schleifscheibe) ein gesondertes Programm für dessen Bewegungen entlang der Aufteilungskontur zu erstellen, da das Entschichtungswerkzeug mit seiner Entschichtungsscheibe (Schleifscheibe) durch Verschwenken, kombiniert mit den Bewegungen des Schlittens entlang der Schneidbrücke und der Bewegung der Schneidbrücke entlang des Glasschneidetisches der Aufteilungskontur folgend bewegt werden kann, wozu das vorher erstellte Programm für das Aufteilen einer Glastafel in Zuschnitte herangezogen werden kann.

Das Kuppeln des Entschichtungswerkzeuges mit dem Schwenkantrieb für das Schneidwerkzeug kann auf verschiedene Art und Weise erfolgen. Eine bevorzugte Maßnahme ist es, das Entschichtungswerkzeug mit einem Zahnrad, das mit der Welle, die das Schneidwerkzeug trägt, verbunden ist, und der ein Antriebsmotor mit Ritzel zugeordnet ist, wahlweise zu kuppeln. Dies kann dadurch erfolgen, dass an der Welle, über die das Entschichtungswerkzeug verschwenkbar gelagert ist, ebenfalls ein Ritzel vorgesehen ist, das bei Bedarf mit dem Zahnrad des Schneidwerkzeuges in Eingriff gebracht wird.

Hiefür gibt es verschiedene Möglichkeiten, beispielsweise wird das gesamte Schneidwerkzeug mit seiner Welle abgesenkt oder angehoben, um das Ritzel mit dem Zahnrad in Eingriff zu bringen, wobei bevorzugt so gearbeitet wird, dass das Ritzel an der Schwenkwelle des Entschichtungswerkzeuges mit dem Zahnrad des Schneidwerkzeuges in Eingriff ist, wenn das Entschichtungswerkzeug für einen Entschichtungsvorgang auf die Glastafel aufgesetzt worden ist.

Eine andere Möglichkeit besteht darin, das Ritzel an der Schwenkwelle des Entschichtungswerkzeuges verschiebbar, jedoch auf Drehung gekuppelt zu lagern, so dass bei Bedarf die Schwenkeinrichtung für das Entschichtungswerkzeug mit der Schwenkeinrichtung (Zahnrad) für das Ritzwerkzeug gekuppelt werden kann, indem das Ritzel entlang der Welle verschoben wird.

In Betracht gezogen ist auch eine Ausführungsform der Erfindung, bei welcher an der Welle des Motors für das Drehen des Schneidwerkzeuges ein weiteres Ritzel vorgesehen ist, das mit einer Zahnscheibe kämmt, die dem Entschichtungswerkzeug zugeordnet ist. Bei dieser Ausführungsform ist bevorzugt, dass das Entschichtungswerkzeug bei Nichtbenützung durch eine Bewegung senkrecht zur Ebene der Glasscheibe von dieser abhebbar ist.

Bei dieser Ausführungsform ergibt sich der Vorteil, dass die Ritzel an der Welle des Motors für das Verstellen (Verdrehen) des Schneidwerkzeuges mit beiden Zahnscheiben ständig in Eingriff bleiben kann. Wird das Entschichtungswerkzeug nicht benötigt, wird das Schleifrad von der Glasscheibe abgehoben. Normalerweise stört es nicht, wenn das von der Glasscheibe abgehobene Schleifrad (Entschichtungsscheibe) beim Ritzen der Glasscheibe verschwenkt wird.

Wenn beispielsweise aus räumlichen oder konstruktiven Gründen der Bereich, um den das Entschichtungswerkzeug verschwenkbar ist, begrenzt ist, kann bei dieser Ausführungsform zwischen der zahnscheibe, die dem Entschichtungswerkzeug zugeordnet ist, und der um eine zur Glastafel senkrechte Achse verdrehbaren Welle, die das Schleifrad trägt, eine lösbare Kupplung vorgesehen sein. Wenn das Schneidrädchen weiter verschwenkbar ist, wird einfach die Kupplung zwischen der das Entschichtungswerkzeug tragenden Welle und der Zahnscheibe, welche dem Entschichtungswerkzeug zugeordnet ist, gelöst.

Dabei kann noch vorgesehen sein, dass die Kupplung zwischen der Zahnscheibe und der das Entschichtungswerkzeug tragenden Welle nur einrückbar ist, um eine drehfeste Verbindung zwischen Zahnscheibe und Welle herzustellen, wenn die Entschichtungsscheibe des Entschichtungswerkzeuges in einer bestimmten Ausrichtung ausgerichtet ist.

Weitere Einzelheiten und Merkmale sowie Vorteile der erfindungsgemäßen Vorrichtung zum Schneiden und Entschichten von Glastafeln ergeben sich aus der nachstehenden Beschreibung von zwei in den Zeichnungen schematisch wiedergegebenen Ausführungsbeispielen.

Es zeigt:
Fig. 1 in Seitenansicht teilweise eine Vorrichtung zum Schneiden und Entschichten von Glastafeln,
Fig. 2 in einer Fig. 1 ähnlichen Darstellung, eine weitere Ausführungsform,
und Fig. 3 eine dritte Ausführungsform einer erfindungsgemäßen Vorrichtung zum Schneiden und Entschichten von Glastafeln.

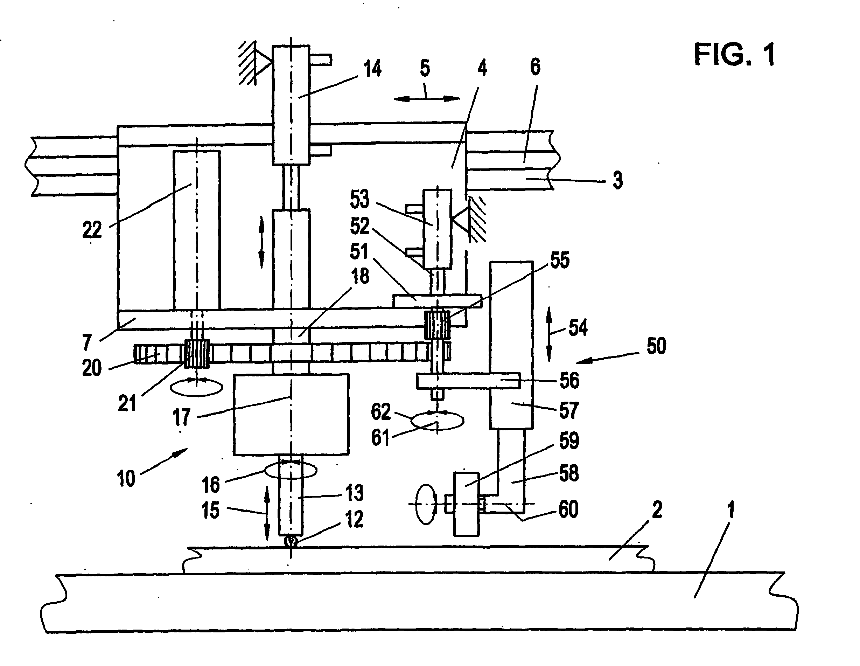

Die erfindungsgemäße Vorrichtung ist an einem Schneidtisch vorgesehen, von dem in Fig. 1 lediglich die Auflageplatte 1 für eine Glastafel 2 gezeigt ist. Eine Schneidbrücke 3, die quer zur Längsseite des Schneidtisches ausgerichtet vorgesehen ist, ist entlang der Längsseiten des Schneidtisches verfahrbar geführt. An der Schneidbrücke 3 ist ein Schlitten 4 geführt, der über einen nicht näher gezeigten Antrieb in Richtung des Doppelpfeiles 5 verfahren werden kann. Beispielsweise ist der Schlitten 4 über Rundstäbe 6 an der Schneidbrücke 3 geführt.

An einer horizontalen Platte 7 des Schlittens 4 ist in dem in Fig. 1 gezeigten Ausführungsbeispiel ein Schneidwerkzeug 10 und ein Entschichtungswerkzeug 50 montiert.

Das Schneidwerkzeug 10 besitzt ein Schneidrädchen 12, das über seine Halterung 13 von einem Druckmittelmotor 14 in Richtung des Doppelpfeiles 15 auf die Oberseite der Glastafel 2 aufgesetzt, oder von dieser abgehoben werden kann.

Das Schneidrädchen 12 ist zusätzlich, wie es durch den Ringpfeil 16 symbolisiert ist, um eine zur Glasscheibe 2 normale Achse 17 verschwenkbar. Dieses Schwenken ist erforderlich, um das Schneidrädchen 12 jeweils so auszurichten, dass es für das Ausführen des Ritzens jeweils richtig ausgerichtet ist (X-Schnitte, Y-Schnitte, usw.). Zusätzlich ist das Schneidrädchen 12 stufenlos verdrehbar, wenn Ritzlinien für nicht gerade Schnitte, also beliebig gekrümmte Schnitte (für "Formenscheiben"), herzustellen sind.

Für das Verschwenken des Schneidrädchens 12 ist mit dessen Welle 18 ein Zahnrad 20 verbunden. Mit dem Zahnrad 20 kämmt ein Ritzel 21, das von einem Motor 22 angetrieben wird, um das Schneidrädchen 12 über seine Welle 18 für den jeweiligen Ritzvorgang richtig auszurichten. So kann mit Hilfe des Schneidrädchens 12 eine auf der Platte 1 eines Glasschneidetisches festgelegte Glastafel 2 nach einem vorher berechneten und beispielsweise durch ein Programm optimierten Aufteilungsmuster geritzt werden, wobei neben den üblichen Schnitten, wie X-Schnitten (in Richtung quer zur Längserstrekkung der Glastafel) und, Y-Schnitten (in Längsrichtung der Glastafel) auch gekrümmte Schnitte für das Herstellen von Formenscheiben ausgeführt werden können. All diese Bewegungen des Schneidrädchens 12 erfolgen durch kombinierte Bewegungen der Schneidbrücke 3 entlang der Platte 1 des Glasschneidetisches, des Schlittens 4 entlang der Schneidbrücke 3 und durch Schwenken des Schneidrädchens 12 um die Achse 17.

An dem Schlitten 4 ist im gezeigten Ausführungsbeispiel noch ein Entschichtungswerkzeug 50 montiert. Dieses Entschichtungswerkzeug 50 ist an einer Platte 51, die an einen horizontalen Teil 7 des Schlittens 4 befestigt ist, angeordnet. Das Entschichtungswerkzeug 50 ist mit einer in der Platte 51 drehbar gelagerten Welle 52 versehen. Die Welle 52 ist durch einen Druckmittelmotor 53, der ebenso wie der Druckmittelmotor 14 für das Schneidwerkzeug 10 am Schlitten 4 abgestützt ist, in Richtung des Doppelpfeiles 54 verstellbar. Auf der Welle 52 sitzt ein Ritzel 55.

Mit der Welle 52 ist ein Arm 56 verbunden, der das eigentliche Entschichtungswerkzeug trägt. Das eigentliche Entschichtungswerkzeug besteht im gezeigten Ausführungsbeispiel aus einem Motor 57 mit angeflanschtem Winkelgetriebe 58 und einer Entschichtungsscheibe 59 ("Schleifscheibe"), die sich um eine horizontale Achse 60 dreht, wenn sie vom Motor 57 angetrieben wird. Die Entschichtungsscheibe 59 ist beispielsweise eine Scheibe mit radiergummiartiger Konsistenz, die mit abrasivem Material versehen sein kann, um eine auf der Glastafel 2 (auf deren Oberseite) vorgesehene (Metall-)Beschichtung zu entfernen, im wesentlichen ohne die Glastafel 2 selbst abtragend zu bearbeiten.

Um von einer Glastafel 2 entlang der vorher berechneten Aufteilungskontur beidseitig von noch zu erzeugenden Ritzlinien eine Beschichtung zu entfernen, wird die Entschichtungsscheibe 59 des Entschichtungswerkzeuges 50 bei von der Glastafel 2 abgehobenem Schneidwerkzeug 10 auf die Glastafel 2 aufgesetzt, indem der Druckmittelmotor 53 entsprechend betätigt wird. Durch diese Bewegung wird auch das Ritzel 55 nach unten bewegt, so dass es mit dem Zahnrad 20 für den Schwenkantrieb des Schneidrädchens 12 in Eingriff kommt. So kann das Entschichtungswerkzeug 50 vom Stellmotor 22 um eine lotrechte Achse 61 verschwenkt werden, wie dies durch den Ringpfeil 62 symbolisiert ist.

Wenn mit Hilfe der Entschichtungsscheibe 59 des Entschichtungswerkzeuges 50 entlang der gesamten Aufteilungskontur entschichtet, also eine (Metall-)Beschichtung von der Glastafel 2 durch abtragendes Bearbeiten entfernt worden ist, wird die Entschichtungsscheibe 59 des Entschichtungswerkzeuges 50 von der Glastafel 2 abgehoben. Dann werden die Ritzlinien mit Hilfe des Schneidwerkzeuges 10 entsprechend der Aufteilungskontur erzeugt und in weiterer Folge die Glastafel 2 in üblicher Weise durch Brechen in Zuschnitte zerteilt.

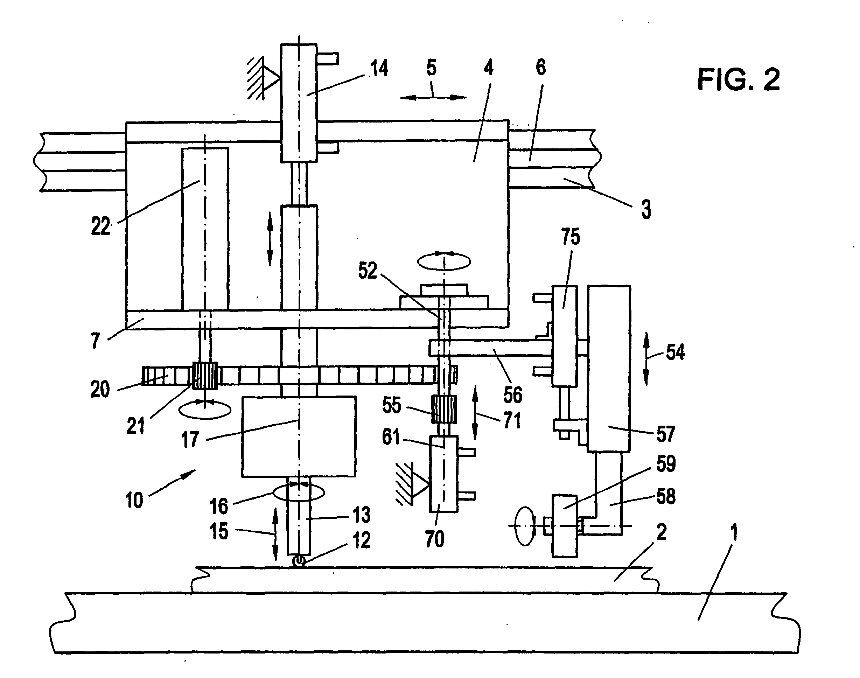

Bei der in Fig. 2 gezeigten Ausführungsform ist die Welle 52, an welcher der Arm 56 für den Motor 57, das Winkelgetriebe 58 und die Entschichtungsscheibe 59 befestigt ist, in der Platte 51 in Höhenrichtung nicht verstellbar, sondern lediglich um die Achse 61 verschwenkbar gelagert. Bei dieser Ausführungsform ist das Ritzel 55 durch einen Stellmotor 70, der wie in Fig. 2 symbolisiert dargestellt, am Schlitten 4 abgestützt ist, in Richtung der Achse 61 verschiebbar (Pfeil 71), um das Ritzel 55 wahlweise mit dem Zahnrad 20 in bzw. außer Eingriff zu bringen. Hiezu ist das Ritzel 55 gegenüber der Welle 52 in Achsrichtung verschiebbar, aber mit der Welle 52 auf Drehung gekuppelt. Die Verbindung des Ritzels 55 mit dem Kolben des Stellmotors 70 ist so ausgebildet, dass sich das Ritzel 55 gegenüber der Kolbenstange des Stellmotors 70 frei drehen kann.

Bei der in Fig. 2 dargestellten Ausführungsform ist die Baugruppe mit der Entschichtungsscheibe 59 in Richtung des Doppelpfeiles 54, also normal zur Glastafel 2 an dem Arm 56 mit Hilfe eines Linearmotors 75 verstellbar gelagert, um die Entschichtungsscheibe 59 wahlweise auf die Glastafel 2 aufzusetzen, oder von dieser abzuheben.

Grundsätzlich ist auch eine Ausführungsform denkbar, bei welcher das Entschichtungswerkzeug 50 mit dem Schwenkantrieb 20, 21, 22 für das Schneidwerkzeug 10 ständig gekuppelt bleibt und nur die Baugruppe mit der Entschichtungsscheibe 59 des Entschichtungswerkzeuges 50 normal zur Glastafel 2 verstellbar ist, um das Entschichtungsrad 59 auf die Glastafel 2 aufzusetzen, bzw. von dieser abzuheben. Bei dieser Ausführungsform wird zwar das Entschichtungswerkzeug 50 bei jeder Schwenkbewegung des Schneidrädchens 12 des Schneidwerkzeuges 10 mitverschwenkt, greift aber bei abgehobenem Entschichtungswerkzeug 50 an der Glastafel 2 nicht an, so dass diese Schwenkbewegung an sich nicht stört.

Zusammenfassend kann ein Ausführungsbeispiel der Erfindung wie folgt beschrieben werden:

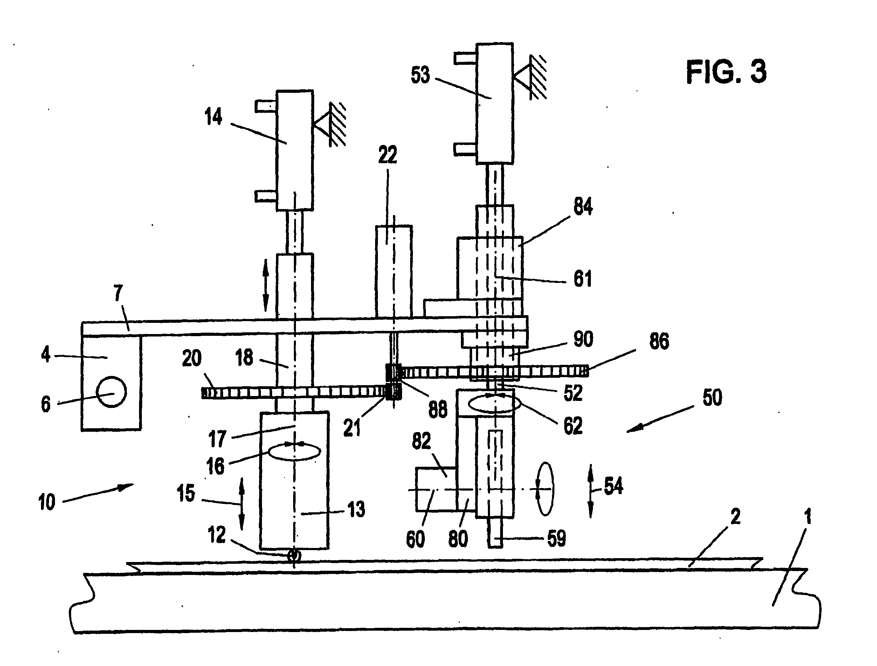

Bei der in Fig. 3 gezeigten Ausführungsform ist am Schlitten 4 eine horizontale Platte 7 befestigt, auf welcher ein Schneidwerkzeug 10 und ein Entschichtungswerkzeug 50 montiert sind. Das Schneidwerkzeug 10 besitzt ein Schneidrädchen 12, das über seine Halterung 13 von einem Druckmittelmotor 14 in Richtung des Doppelpfeiles 15 auf die Oberseite einer Glastafel 2 aufgesetzt, oder von dieser abgehoben werden kann. Das Schneidrädchen 12 ist zusätzlich, wie es durch den Ringpfeil 16 symbolisiert ist um eine zur Glasscheibe 2 normale Achse 17, verdrehbar. Dieses Verdrehen ist erforderlich, um das Schneidrädchen 12 jeweils so auszurichten, dass es für das Ausführen des Ritzens jeweils richtig ausgerichtet ist (X-Schnitte, Y-Schnitte, usw.). Zusätzlich ist das Schneidrädchen 12 stufenlos verdrehbar, wenn Ritzlinien für nicht gerade Schnitte, also beliebig gekrümmte Schnitte (für Formenscheiben), herzustellen sind.

Für das Verschwenken des Schneidrädchens 12 ist mit dessen Welle 18 ein Zahnrad 20 verbunden, mit dem ein Ritzel 21 kämmt, das von einem Motor 22 angetrieben wird, um das Schneidrädchen 12 über seine Welle 18 in für den jeweiligen Ritzvorgang richtige Ausrichtung zu drehen, oder das Schneidrädchen 12 kontinuierlich zu drehen, wenn gekrümmte oder kreisförmige Schnitte auszuführen sind.

Das Entschichtungswerkzeug 50 der Ausführungsform der erfindungsgemäßen Vorrichtung gemäß Fig. 3 besitzt eine Entschichtungsscheibe 59, die um eine zur Ebene der Glastafel 2 parallele Achse 60 drehbar ist. Hiezu ist an dem Träger 80 für die Entschichtungsscheibe 90 ein Motor 82 befestigt, der die Entschichtungsscheibe 59 in Drehung versetzt.

Der Träger 80 für die Entschichtungsscheibe 59 ist an einer Welle 52 befestigt, die in einer Führung 84, die an dem horizontalen Teil 7 des Schlittens 4 befestigt ist, drehbar (Ringpfeil 52) und heb- und senkbar (Pfeil 54) ist. Für das Heben und Senken der Entschichtungsscheibe 59 des Entschichtungswerkzeuges 50 ist ein Druckmittelmotor 53 vorgesehen. So kann die Entschichtungsscheibe 59 für einen Entschichtungsvorgang auf eine Glastafel 2 aufgesetzt, oder bei Nichtgebrauch von der Glastafel 2 abgehoben werden.

Für das Verdrehen des Entschichtungswerkzeuges 50 Richtung des Ringpfeiles 62 ist eine Zahnscheibe 86 vorgesehen, die mit einem auf der Welle des Antriebsmotors 22 sitzenden Ritzel 88 kämmt. Die Zahnscheibe 68 ist mit der Welle 52 des Entschichtungswerkzeuges 50 über eine lösbare Kupplung 90 verbunden. Ist die Kupplung 90 eingerückt, dann wird das Entschichtungswerkzeug 50 insbesondere die Entschichtungsscheibe 59 von dem Antriebsmotor 22 verschwenkt, wie dies zuvor für die Ausführungsformen der Fig. 1 und 2 beschrieben worden ist. Wenn die Kupplung 90 gelöst ist, dreht sich zwar das Zahnrad 86, aber die Welle 52 und damit die Entschichtungsscheibe 59 werden nicht veschwenkt. Dies ist insbesondere dann von Bedeutung, wenn das Schneidrädchen 12 in einem Ausmaß, z.B. um mehr als 180 **°** verschwenkt werden soll, das für das Entschichtungswerkzeug 50, insbesondere Baugruppe aus Träger 80, Motor 82 und Entschichtungsscheibe 59 aus räumlichen/konstruktiven Gründen nicht ausführbar ist, so dass sogenannte Baugruppe durch Lösen der Kupplung 90 von dem Zahnrad 86 getrennt werden muss. Solche Schwenkbewegungen des Schneidrädchens 12 um mehr als 180 ° ergeben sich beispielsweise, wenn in sich geschlossene, z.B. kreisrunde, Schnitte auszuführen sind, da bei solchen Schnitten der Ritzvorgang nicht unterbrochen werden soll.

An der Schneidbrücke 4 einer Vorrichtung zum Zerteilen von Glastafeln 2 in Zuschnitte (Glasschneidetisch) ist ein Schneidwerkzeug 10, dem ein Schwenkantrieb 20, 21, 22 zugeordnet ist, und ein Werkzeug 50 zum Abtragen einer Beschichtung von einer Glastafel 2 mit einer Entschichtungsscheibe 59 vorgesehen. Das Werkzeug 50 zum Entschichten ist an dem Schlitten 4 um eine zur Glastafel 2 normale Achse 61 verschwenkbar gelagert. Beim Benützen des Werkzeuges 50 zum Entschichten einer Glastafel 2 entlang der Aufteilungskontur, also im Bereich beidseitig von in einer Glastafel 2 erzeugten oder zu erzeugenden Ritzlinien wird die Entschichtungsscheibe 59 auf die Oberfläche der Glastafel 2 aufgesetzt und das Werkzeug 50 mit Hilfe des Schwenkantriebes 20, 21, 22 für das Schneidwerkzeug 10 um die zur Glastafel 2 normale Achse 61 geschwenkt, um die Entschichtungsscheibe 59 richtig auszurichten. Die Kupplung zwischen dem Schwenkantrieb 20, 21, 22 für das Schneidwerkzeug 10 mit dem Werkzeug 50 für das Entschichten ist wahlweise lösbar, so dass beim Ritzen der Glastafel 2 mit Hilfe des Schneidwerkzeuges 10 das Werkzeug 50 zum Entschichten nicht mitbewegt wird.

## Patentansprüche

1. Vorrichtung zum Schneiden und Entschichten von Glastafeln (2) mit einer Auflagefläche (1) für eine Glastafel (2), einem Schneidwerkzeug (10) und einem Entschichtungswerkzeug (50), die an einem Schlitten (4) angeordnet sind, wobei der Schlitten (4) entlang einer Schneidbrücke (3), die ihrerseits entlang der Auflagefläche (1) verschiebbar ist, verfahrbar ist, und wobei dem Schneidwerkzeug (10) ein Drehantrieb (20, 21, 22) für ein Schneidrädchen (12) zugeordnet ist, um dieses um eine zur Auflagefläche (1) normale Achse (17) zu schwenken, **dadurch gekennzeichnet, dass** das Entschichtungswerkzeug (50) am Schlitten (4) um eine zur Auflagefläche (1) normale Achse (61) verschwenkbar gelagert ist, dass die Achse (61), um welche das Entschichtungswerkzeug (50) verschwenkbar ist, von der Achse (17), um welche das Schneidrädchen (12) verschwenkbar ist, im Abstand angeordnet ist und dass das Entschichtungswerkzeug (50) mit dem Drehantrieb (20, 21, 22) des Schneidwerkzeuges (10) durch eine Kupplung verbunden ist.

2. Vorrichtung nach Anspruch 1, **dadurch gekennzeichnet, dass** die Kupplung zwischen dem Drehantrieb (20, 21, 22) des Schneidwerkzeuges (10) und dem Entschichtungswerkzeug (50) lösbar ist.

3. Vorrichtung nach Anspruch 1 oder 2, **dadurch gekennzeichnet, dass** das Entschichtungswerkzeug (50) am Schlitten (4) in einer zur Auflagefläche (1) normalen Richtung (54) verstellbar ist.

4. Vorrichtung nach Anspruch 3, **dadurch gekennzeichnet, dass** zum Verstellen des Entschichtungswerkzeuges (50) ein Linearmotor (53, 75) vorgesehen ist.

5. Vorrichtung nach einem der Ansprüche 1 bis 4, **dadurch gekennzeichnet, dass** das Entschichtungswerkzeug (50) über einen Arm (56) an einer Welle (52) befestigt ist, die am Schlitten (4) um die Achse (61) drehbar gelagert ist.

6. Vorrichtung nach Anspruch 5, **dadurch gekennzeichnet, dass** der Welle (52) ein Ritzel (55) zugeordnet ist, das verstellbar ist, um es wahlweise mit einem Zahnrad (20) des Schwenkantriebes (20, 21, 22) des Schneidwerkzeuges (10) in Eingriff zu bringen.

7. Vorrichtung nach Anspruch 6, **dadurch gekennzeichnet, dass** das Ritzel (55) durch Verstellen in einer Richtung parallel zur Achse (61), um die das Entschichtungswerkzeug (50) verschwenkbar ist, mit dem Zahnrad (20) gekuppelt bzw. entkuppelbar ist.

8. Vorrichtung nach Anspruch 6 oder 7, **dadurch gekennzeichnet, dass** das Ritzel (55) auf der Welle fix montiert ist und die Welle mit dem an ihr befestigten Entschichtungswerkzeug (50) in Richtung der Achse (61) verstellbar ist (Linearmotor 53).

9. Vorrichtung nach Anspruch 6 oder 7, **dadurch gekennzeichnet, dass** das Ritzel (55) mit Hilfe eines Linearmotors (70) entlang (Pfeil 71) der Welle (52) verschiebbar ist, mit der Welle (52) aber auf Drehung gekuppelt ist.

10. Vorrichtung nach einem der Ansprüche 1 bis 9, **dadurch gekennzeichnet, dass** die Entschichtungsscheibe (59) von einem Motor (57) über ein Winkelgetriebe (58) angetrieben ist.

11. Vorrichtung nach einem der Ansprüche 1 bis 10, **dadurch gekennzeichnet, dass** zwischen der Welle (52) des Entschichtungswerkzeuges (50), welche die Entschichtungsscheibe (59) trägt, und einem Zahnrad (86), das von dem Motor (22) drehangetrieben wird, eine Kupplung (90) vorgesehen ist.

12. Vorrichtung nach Anspruch 11, **dadurch gekennzeichnet, dass** die Zahnscheibe (86) mit einem auf der Welle des. Motors (22) angeordneten Ritzel (88) kämmt.

13. Vorrichtung nach Anspruch 12, **dadurch gekennzeichnet, dass** auf der Welle des Motors (22) ein Ritzel (21) für die Zahnscheibe (20) des Schneidwerkzeuges (10) und ein weiters Ritzel (88) für die Zahnscheibe (86) des Entschichtungswerkzeuges (50) vorgesehen ist.

14. Vorrichtung nach einem der Ansprüche 11 bis 13, **dadurch gekennzeichnet, dass** die Welle (52), die das Entschichtungsrad (59) trägt, senkrecht (Pfeil 54) zur Ebene der Auflagefläche (1) heb- und senkbar ist.

15. Vorrichtung nach Anspruch 14, **dadurch gekennzeichnet, dass** an der Welle (52) ein Träger (80) befestigt ist, in dem die Entschichtungsscheibe (59) drehgelagert ist, und dass der Träger (80) einen Antriebsmotor (82) für die Entschichtungsscheibe (59) trägt.

16. Vorrichtung nach einem der Ansprüche 1 bis 15, **dadurch gekennzeichnet, dass** die Entschichtungsscheibe (59) des Entschichtungswerkzeuges (50) um 180 ° verschwenkbar ist.

17. Vorrichtung nach einem der Ansprüche 11 bis 16, dass die Achse (17) des Schneidwerkzeuges (10), die Achse (61) des Entschichtungswerkzeuges (50) und die Achse der Welle des Motors (22) in den Eckpunkten eines Dreiecks angeordnet sind.

## Claims

1. Device for cutting and stripping of glass sheets (2) with a support surface (1) for a glass sheet (2), a cutting tool (10) and a stripping tool (50) which are located on a carriage (4), the carriage (4) being movable along the cutting bridge (3) which for its part can be moved along the support surface (1) and a rotary drive (20, 21, 22) for a cutting wheel (12) being assigned to the cutting tool (10), in order to pivot it around an axis (17) which is normal to the support surface (1), **characterized in that** the stripping tool (50) is mounted on the carriage (4) to be able to pivot it around an axis (61) which is normal to the support surface (1) and that the axis (61) about which the stripping tool (50) is pivotable is disposed at a distance from the axis (17) about which the cutting wheel (12) is pivotable and that the stripping tool (50) is connected to the rotary drive (20, 21, 22) of the cutting tool (10) by a coupling.

2. Device according to claim 1, **characterized in that** the coupling between the rotary drive (20, 21, 22) of the cutting tool (10) and the stripping tool (50) can be released.

3. Device according to claim 1 or 2, **characterized in that** the stripping tool (50) on the carriage (4) is adjustable in the direction (54) normal to the support surface (1).

4. Device according to claim 3, **characterized in that** a linear motor (53, 75) is provided for adjusting the stripping tool (50).

5. Device according to one of the claims 1 to 4, **characterized in that** the stripping tool (50) is attached via an arm (56) to a shaft (52) which is mounted on the carriage (4) to be able to pivot around the axis (61).

6. Device according to claim 5, **characterized in that** the shaft (52) is assigned a pinion (55) which is adjustable in order to selectively engage it to a gear wheel (20) of the pivoting drive (20, 21, 22) of the cutting tool (10).

7. Device according to claim 6, **characterized in that** the pinion (55) can be pivoted, coupled to the gear wheel (20), or decoupled by adjustment in one direction parallel to the axis (61) around which the stripping tool (50) can be pivoted.

8. Device according to claim 6 or 7, **characterized in that** the pinion (55) is mounted fixed on the shaft and the shaft with the stripping tool (50) attached here can be adjusted in the direction of the axis (61) (linear motor 53).

9. Device according to claim 6 or 7, **characterized in that** the pinion (55) can be moved using a linear motor (70) (arrow 71) of the shaft (52), but is rotationally coupled to the shaft (52).

10. Device according to one of claims 1 to 9, **characterized in that** the stripping disk (59) is driven by a motor (57) via an angular gear (58).

11. Device according to one of claims 1 to 10, **characterized in that** a coupling (90) is provided between the shaft (52) of the stripping tool (50) which bears the stripping disk (59) and a gear wheel (86) which is rotationally driven by the motor (22).

12. Device according to claim 11, **characterized in that** the sprocket wheel (86) meshes with a pinion (88) located on the shaft of the motor (22).

13. Device according to claim 12, **characterized in that** on the shaft of the motor (22) there are a pinion (21) for the sprocket wheel (20) of the cutting tool (10) and a further pinion (88) for the sprocket wheel (86) of the stripping tool (50).

14. Device according to one of claims 11 to 13, **characterized in that** the shaft (52) which bears the stripping disk (59) can be raised and lowered (arrow 54) perpendicularly to the plane of the support surface (1).

15. Device according to claim 14, **characterized** a support (80) is mounted on the shaft (52) and the stripping disk (59) is pivotally mounted in the support and that the support (80) carries drive motor (82) for the stripping disk (59).

16. Device according to one of claims 1 to 15, **characterized in that** the stripping disk (59) of stripping tool (50) can be pivoted by 180°.

17. Device according to one of claims 11 to 16, **characterized in that** the axis (17) of the cutting tool (10), the axis (61) of the stripping tool (50) and the axis of the shaft of the motor (22) are located in the corner points of a triangle.

## Revendications

1. Dispositif de découpe et d'enlèvement de couches de verre (2) comprenant une face d'appui (1) pour une couche de verre (2), un outil de découpe (10) et un outil d'enlèvement (50) qui sont placés sur un coulisseau (4), le coulisseau (4) étant mobile le long d'un pont de découpe (3) qui est à son tour mobile le long de la face d'appui (1) et l'outil de découpe (10) ayant un entraînement rotatif (20, 21, 22) pour une molette de découpe (12) pour faire pivoter celle-ci sur un axe (17) normal par rapport à la face d'appui (1), **caractérisé en ce que** l'outil d'enlèvement (50) est placé de manière mobile sur le coulisseau (4) sur un axe (61) normal par rapport à la face d'appui (1), que l'axe (61) sur lequel l'outil d'enlèvement (50) peut pivoter est à distance de l'axe (17) sur lequel la molette de découpe (12) peut pivoter et que l'outil d'enlèvement (50) est relié à l'entraînement rotatif (20, 21, 22) de l'outil de découpe (10) par un accouplement.

2. Dispositif selon la revendication 1, **caractérisé en ce que** l'accouplement entre l'entraînement rotatif (20, 21, 22) de l'outil de découpe (10) et l'outil d'enlèvement (50) est amovible.

3. Dispositif selon la revendication 1 ou 2, **caractérisé en ce que** l'outil d'enlèvement (50) est mobile sur le coulisseau (4) dans une direction (54) normale par rapport à la face d'appui (1).

4. Dispositif selon la revendication 3, **caractérisé en ce qu'**un moteur linéaire (53, 75) est prévu pour déplacer l'outil d'enlèvement (50).

5. Dispositif selon l'une des revendications 1 à 4, **caractérisé en ce que** l'outil d'enlèvement (50) est fixé par un bras (56) sur un arbre (52) qui est disposé de manière rotative sur l'axe (61) sur le coulisseau (4).

6. Dispositif selon la revendication 5, **caractérisé en ce que** l'arbre (52) a un pignon (55) qui est mobile pour l'amener au choix en prise avec une roue dentée (20) de la commande de pivotement (20, 21, 22) de l'outil de découpe (10).

7. Dispositif selon la revendication 6, **caractérisé en ce que** le pignon (55) est mobile par un déplacement dans une direction parallèle à l'axe (61) sur lequel l'outil d'enlèvement (50) peut pivoter et est couplé à la roue dentée (20) respectivement découplé de celle-ci.

8. Dispositif selon la revendication 6 ou 7, **caractérisé en ce que** le pignon (55) est monté de manière fixe sur l'arbre et que l'arbre est mobile (moteur linéaire 53) en direction de l'axe (61) avec l'outil d'enlèvement (50) qui est fixé dessus.

9. Dispositif selon la revendication 6 ou 7, **caractérisé en ce que** le pignon (55) à l'aide d'un moteur linéaire (70) est mobile le long (flèche 71) de l'arbre (52), mais est couplé en rotation à l'arbre (52).

10. Dispositif selon l'une des revendications 1 à 9, **caractérisé en ce que** le disque d'enlèvement (59) est entraîné par un moteur (57) par un engrenage angulaire (58) .

11. Dispositif selon l'une des revendications 1 à 10, **caractérisé en ce qu'**un accouplement (90) est prévu entre l'arbre (52) de l'outil d'enlèvement (50) qui supporte le disque d'enlèvement (59) et une roue dentée (86) entraînée en rotation par le moteur (22).

12. Dispositif selon la revendication 11, **caractérisé en ce que** le disque denté (86) s'engrène avec un pignon (88) placé sur l'arbre du moteur (22).

13. Dispositif selon la revendication 12, **caractérisé en ce que** sur l'arbre du moteur (22), un pignon (21) est prévu pour le disque denté (20) de l'outil de découpe (10) et un autre pignon (88) est prévu pour le disque denté (86) de l'outil de prélèvement (50).

14. Dispositif selon l'une des revendications 11 à 13, **caractérisé en ce que** l'arbre (52) qui supporte le disque d'enlèvement (59) peut être soulevé et abaissé perpendiculairement (flèche 54) au plan de la face d'appui (1).

15. Dispositif selon la revendication 14, **caractérisé en ce que** sur l'arbre (52), un support est fixé dans lequel le disque d'enlèvement (59) est positionné en rotation et que le support (80) supporte un moteur d'entraînement (82) pour le disque d'enlèvement (59).

16. Dispositif selon l'une des revendications 1 à 15, **caractérisé en ce que** le disque d'enlèvement (59) de l'outil de prélèvement (50) peut pivoter de 180°.

17. Dispositif selon l'une des revendications 11 à 16, **caractérisé en ce que** l'axe (17) de l'outil de découpe (10), l'axe (61) de l'outil de prélèvement (50) et l'axe de l'arbre du moteur (22) sont placés dans les angles d'un triangle.
